# FASCICULE DE BREVET EUROPEEN

(11) **EP 3 733 261 B1**
(45) Date de publication et mention de la délivrance du brevet: **19.04.2023**
(21) Numéro de dépôt: 20171936.6
(22) Date de dépôt: 28.04.2020
(51) Int. Cl.: B01D 46/10, B01D 46/52

(54) **PROCÉDÉ DE FABRICATION D'UN ÉLÉMENT FILTRANT ET ÉLEMENT FILTRANT POUR FILTRE DE VÉHICULE AUTOMOBILE**
HERSTELLUNGSVERFAHREN EINES FILTERLEMENTS, UND FILTERLEMENT FÜR KRAFTFAHRZEUGFILTER
METHOD FOR MANUFACTURING A FILTERING ELEMENT AND FILTERING ELEMENT FOR FILTER OF A MOTOR VEHICLE

(30) Priorité: 30.04.2019 FR 1904548
(43) Date de publication de la demande: 04.11.2020
(73) Titulaire: NOVARES FRANCE, 92140 Clamart (FR)
(72) Inventeur: ASENSIO, Louis, 06500 MENTON (FR); LEBRUN, Michel, 62138 AUCHY LES MINES (FR)
(74) Mandataire: Germain Maureau

(56) Documents cités:
- EP-A1- 0 490 169
- EP-A1- 3 424 581
- WO-A1-2014/199097
- FR-A1- 3 069 454

## Description

La présente invention concerne un procédé de fabrication d'un élément filtrant, notamment un élément filtrant destiné à la filtration de l'air pour un véhicule automobile.

L'invention concerne également un élément filtrant pour filtre de véhicule automobile et un ensemble de filtration d'air pour véhicule automobile comprenant un tel élément filtrant.

Sur un véhicule équipé d'un moteur à combustion interne, le flux d'air qui alimente le moteur passe au travers d'un filtre à air qui retire les particules indésirables telles que poussières, sable, insectes...Les particules présentes dans l'air ont un effet perturbateur sur le fonctionnement du moteur, en augmentant l'usure, et risquent de l'endommager.

Par filtre à air, on entend un élément filtrant en papier ou en matériau synthétique, généralement plié afin d'augmenter la surface filtrante et une boîtier de filtre à air logeant ledit élément filtrant. Des procédés de fabrication destinés à former de tels éléments filtrants ont notamment été décrits dans les documents WO 2014/199097 A1 et FR 3 069 454 A1.

Ces éléments filtrants sont dotés d'un joint qui assure l'étanchéité entre l'élément filtrant et le boitier de filtre à air qui constitue le réceptacle de l'élément filtrant. La gestion de l'étancheité est un point critique puisqu'il convient de garantir une séparation stricte entre un volume d'air non filtré communément appelé « air sale » et un volume contenant l'air filtré communément appelé « air propre ».

Le joint disposé en périphérie de l'élément filtrant peut présenter différentes compositions, telles que du polyuréthane ou de la résine thermoplastique surmoulé sur l'élément filtrant. Des inconvénients relatifs à l'usage d'un joint polyuréthane résident en ce que sa fabrication nécessite la mise en oeuvre d'une réaction chimique avec des équipements spécifiques, tel qu'un dispositif de dosage des réactifs chimiques, des procédures de protection des opérateurs, des opérations manuelles de reprise des bavures formées lors du surmoulage.

De plus, le procédé de production par surmoulage est lourd en investissement dans la mesure où il nécessite un ou plusieurs moule(s) de surmoulage pour chaque dimension de filtre. Le procédé génère également une disparité de performance des éléments filtrants car, lors du surmoulage, le polyuréthane ou la résine thermoplastique peut migrer à l'intérieur des plis de l'élément filtrant et réduire ainsi la surface de filtration. En outre, il est très difficile de séparer un joint en polyuréthane ou en résine thermoplastique obtenu par surmoulage du panneau filtrant en matériau non tissé de sorte que le recyclage est quasimement impossible.

Selon une autre possibilité, le joint peut être formé par thermoformage du pourtour du panneau filtrant, sans ajout de matière ou de composant, mais nécessite cependant un procédé de production complexe. Cette méthode nécessite également de prévoir un moule de thermoformage pour chaque taille de filtre. De plus, la zone de joint thermoformée réduit la surface de filtration utile.

De plus, ce procédé nécessite une opération de reprise qui ne peut être réalisée dans le flux de production. Ceci entraine donc une augmentation du prix de revient de la pièce.

Le joint peut également être formé à partir d'un média non tissé collé ou soudé au panneau filtrant. Ce média non tissé peut, par exemple, être formé à partir d'une pièce pleine qui sera évidée pour former un cadre aux dimensions adaptées au panneau filtrant. Un inconvénient de cette méthode réside en ce qu'une perte importante de matière résulte de l'évidement, ce qui se répercute sur son coût de revient. Un autre inconvénient de cette méthode réside en ce que la mise en place de ce cadre prédécoupé à la périphérie des quatre cotés d'une des faces supérieure ou inférieur du panneau filtrant est difficile à réaliser dans le flux de production.

Le joint en média non tissé peut également être disposé sous forme de quatre bandelettes superposées à la périphérie des quatre cotés d'une des faces supérieure ou inférieur du panneau filtrant mais cette configuration nécessite de gérer le positionnement précis de chaque bandelette et de prévoir un robot ou un opérateur pour les mettre en place.

Le joint en média non tissé peut également être disposé sous forme de deux bandelettes disposées sur les extrémités latérales des plis du panneau filtrant, mais cette solution ne permet pas d'assurer simplement une continuité d'étanchéité sur tout le pourtour de l'élément filtrant.

Dans ce contexte technique, un but de l'invention est de proposer un procédé de fabrication d'un élément filtrant destiné à la filtration de l'air pour un véhicule automobile, qui soit à la fois simple et peu onéreux, et qui permette de former un élément filtrant utilisable dans un ensemble de filtration d'air, ledit élément filtrant ne présentant pas les inconvénients de l'art antérieur susmentionné.

A cet effet, l'invention a pour objet un procédé de fabrication d'un élément filtrant, notamment un élément filtrant destiné à la filtration de l'air pour un véhicule automobile, le procédé comprenant les étapes consistant à :
a) Dérouler une bande de média filtrant comportant des fibres synthétiques, la bande présentant deux bords longitudinaux et un bord latéral avant perpendiculaire aux bords longitudinaux, et guider la bande dans une direction d'avancement, puis dans cette direction d'avancement
b) Réaliser une pluralité de marquages sur la bande de média filtrant selon une direction transversale aux bords longitudinaux, au moins une partie des marquages possédant une portion centrale de forme pointue et deux portions latérales plates entourant ladite portion centrale, puis
c) Plier la bande de média filtrant le long de chaque marquage de manière à conformer la bande selon un accordéon, et ensuite
d) Découper la bande perpendiculairement aux bords longitudinaux de manière à former un bord latéral arrière parallèle au bord latéral avant,
le procédé comprenant une étape supplémentaire consistant à former une zone plate latérale le long des bords latéraux avant et arrière respectivement, chacune des zones plates latérales s'étendant entre les bords longitudinaux, ladite étape supplémentaire étant réalisée par marquage de la bande lors de l'étape b), chacune des zones plates latérales correspondant à un marquage à profil rectangulaire ou trapézoïdal.

Ainsi configuré, le procédé selon la revendication 1 permet de former un élément filtrant, selon la revendication 9, possédant des rebords plats le long de ses bords longitudinaux et latéraux. Ces rebords plats serviront de support à un joint d'étanchéité lors de l'étape de formation d'un ensemble de filtration d'air. Du fait de leur planéité, le risque d'un mauvais positionnement du joint d'étanchéité à l'intérieur de la boîte à filtre est ainsi évité. Une continuité d'étanchéité sur tout le pourtour de l'élément filtrant peut donc être assuré sans nécessité la mise en oeuvre d'un procédé de fabrication complexe et onéreux.

Le procédé de l'invention pourra également comporter une ou plusieurs des caractéristiques suivantes :
- les marquages de l'étape b) sont réalisés au moyen de deux arbres cannelés disposés en vis-à-vis et entre lesquels circule la bande, chacun des arbres cannelés présentant à sa surface périphérique une pluralité de zones en relief et une pluralité de zones en creux destinées à recevoir les zones en relief de l'autre arbre cannelé, ladite pluralité de zones en relief, respectivement de zones en creux, comprenant des premières zones en relief, respectivement des premières zones en creux, présentant un profil pointu dans une portion centrale et un profil plat dans deux portions latérales entourant ladite portion centrale, et au moins deux deuxièmes zones en relief, respectivement deux deuxièmes zones en creux, présentant un profil rectangulaire ou trapézoïdal.
- l'étape de formation des zones plates latérales est réalisée après l'étape c) ou l'étape d) et consiste d'abord à chauffer la bande le long du bord latéral avant, respectivement arrière, et à aplatir la bande au niveau de la zone plate à former.
- le chauffage de la bande est réalisé au moyen d'un dispositif de chauffage choisi parmi une sonotrode ultrasonique, des buses de soufflage d'air chaud et un bloc chauffant.
- les marquages de l'étape b) sont réalisés au moyen de deux arbres cannelés disposés en vis-à-vis et entre lesquels circule la bande, chacun des arbres cannelés présentant à sa surface périphérique une pluralité de zones en relief et une pluralité de zones en creux destinées à recevoir les zones en relief de l'autre arbre cannelé, lesdites zones en relief, respectivement lesdites zones en creux, présentant un profil pointu dans une portion centrale et un profil plat dans deux portions latérales entourant ladite portion centrale.
- le pliage de l'étape c) est réalisé au moyen de deux vis sans fin disposées de part et d'autre des bords longitudinaux de la bande.
- le procédé comprend en outre une étape d'embossage de la bande de manière à former des empreintes d'espacement, ladite étape d'embossage étant réalisée de préférence avant l'étape b).
- le procédé comprend en outre une étape de dépose d'un cordon de colle sur la bande, entre les étapes b) et c).

L'invention a également pour objet un élément filtrant selon la revendication 9.

L'invention a également pour objet un ensemble de filtration d'air pour véhicule automobile selon la revendication 10 comprenant une boîte à filtre dans laquelle débouche une entrée d'air, un élément filtrant selon la revendication 9 logé à l'intérieur de la boîte à filtre, un couvercle de boîte à filtre fermant la boîte à filtre, et un joint d'étanchéité disposé entre le couvercle et l'élément filtrant, le joint d'étanchéité s'étendant le long des rebords plats longitudinaux et latéraux de l'élément filtrant.

Dans une première configuration de l'invention, le joint d'étanchéité est surmoulé à l'intérieur du couvercle de boîte à filtre.

Dans une deuxième configuration de l'invention, le joint d'étanchéité est déposé in situ sur les rebords plats longitudinaux et latéraux de l'élément filtrant.

D'autres caractéristiques et avantages de la présente invention ressortiront clairement de la description détaillée ci-après de plusieurs modes de réalisation de l'invention donnés à titre d'exemples non limitatifs, en référence aux dessins annexés dans lesquels :
[Fig. 1] est une représentation schématique en perspective d'un premier dispositif permettant la mise en oeuvre du procédé de fabrication d'un élément filtrant selon un premier mode de réalisation de l'invention ;
[Fig. 2] est une représentation schématique en coupe des arbres cannelés utilisés dans le dispositif de la Fig. 1 pour former les marquages et embossages dans la bande de média filtrant ;
[Fig. 3] est une représentation en perspective d'un élément filtrant obtenu au moyen du dispositif de la Fig. 1 ;
[Fig. 4] est une représentation schématique en perspective d'un deuxième dispositif permettant la mise en oeuvre du procédé de fabrication d'un élément filtrant selon un deuxième mode de réalisation de l'invention;
[Fig. 5] est une vue agrandie de plusieurs moyens de chauffage et d'aplatissement de la bande utilisables dans le dispositif de la Fig. 4 ;
[Fig. 6] est une vue partielle agrandie de la bande, une fois que l'un des plis transversaux a été aplati ;
[Fig. 7] est une vue schématique des étapes successives permettant de réaliser un ensemble de filtration d'air, selon deux variantes de réalisation possibles de l'invention.

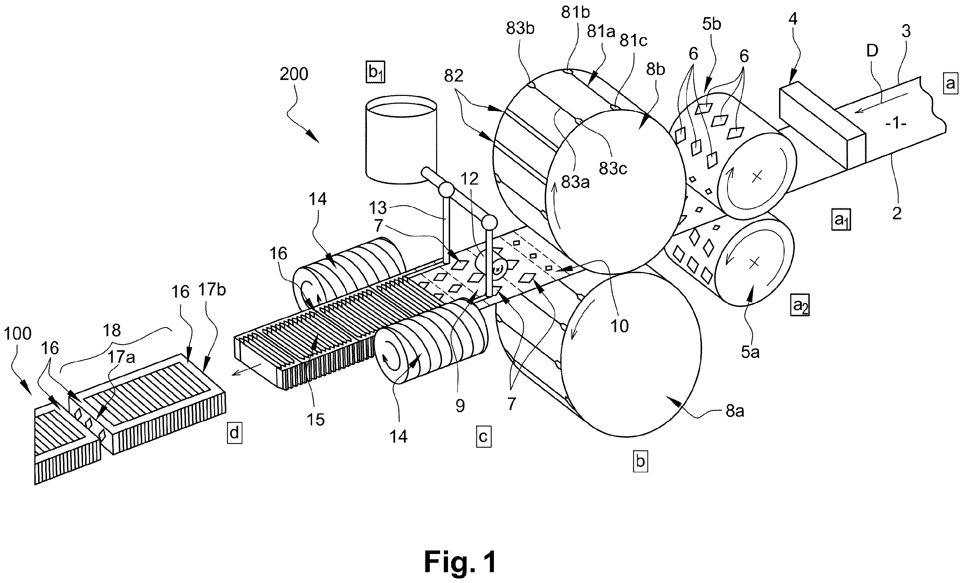

La figure 1 illustre le déroulement du procédé de fabrication d'un élément filtrant 100 pour véhicule automobile dans un dispositif 200 destiné à la mise en oeuvre de ce procédé à partir d'une bande 1 de média filtrant. La bande 1 de média filtrant est formée de fibres synthétiques, non tissées, et présente deux bords longitudinaux 2, 3 et un bord latéral avant (non représenté) perpendiculaire auxdits bords longitudinaux 2, 3. Dans une étape a) du procédé, la bande 1 est d'abord déroulée et guidée par des moyens de déroulement du dispositif 200 dans une direction d'avancement D dans le dispositif 200. Dans une étape a1) du procédé, un traitement thermique effectué sous une rampe de chauffage 4 par infrarouge préchauffe la bande 1 de média filtrant qui circule ensuite, dans une étape a2) non essentielle du procédé, entre deux cylindres d'embossage 5a, 5b entraînés en rotation en sens opposé, lesdits cylindres d'embossage 5a, 5b étant munis à leur périphérie de poinçons d'embossage 6 mâles et femelles de manière à réaliser une pluralité d'empreintes d'espacement 7 dans la bande 1. Dans une étape b) du procédé, la bande 1 circule ensuite entre deux arbres cannelés 8a, 8b entraînés en rotation en sens opposé pour y réaliser une pluralité de marquages 10, 11. Comme on peut le voir sur la figure 1, les marquages 10, 11 s'orientent selon une direction transversale aux bords longitudinaux 2, 3 de la bande 1.

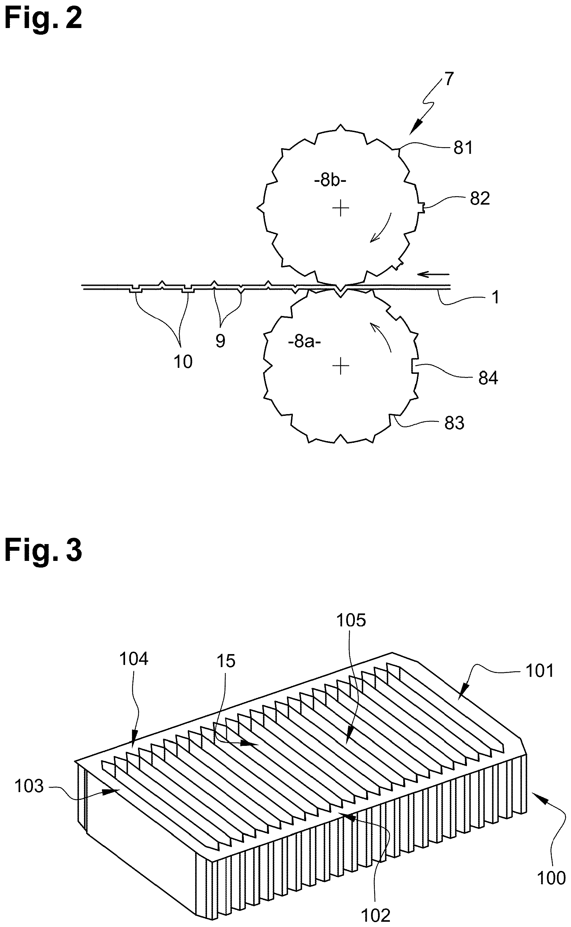

Comme représenté sur la figure 2, les arbres cannelés 8a, 8b sont disposés en vis-à-vis, de telle sorte que la bande 1 puisse circuler entre eux pour être marquée. Chaque arbre cannelé 8a, 8b peut, par exemple, être réalisé en acier usiné. Chacun des arbres cannelés 8a, 8b présente à sa surface périphérique une pluralité de zones en relief 81, 82 et une pluralité de zones en creux 83, 84 destinées à recevoir les zones en relief 81, 82 de l'autre arbre cannelé 8a, 8b. La pluralité de zones en relief 81, 82, respectivement de zones en creux 83, 84, comprend des premières zones en relief 81, respectivement des premières zones en creux 83, présentant un profil pointu dans une portion centrale 81a, respectivement 83a, et un profil plat dans deux portions latérales 81b, 81c, respectivement 83b, 83c, entourant ladite portion centrale 81a, respectivement 83a, et deux deuxièmes zones en relief 82, respectivement deux deuxièmes zones en creux 84, présentant un profil rectangulaire ou trapézoïdal. Les premières zones en relief et en creux 81, 83 des arbres cannelés 8a, 8b permettent de former dans la bande 1 une première série de marquages 9 possédant une forme pointue dans une partie centrale de la bande 1 et une forme aplatie de part et d'autre de ladite partie centrale. Comme expliqué plus loin, ces marquages 9 permettront de définir des rebords plats longitudinaux dans l'élément filtrant 100. Les deuxièmes zones en relief et en creux 82, 84 des arbres cannelés 8a, 8b permettent de former dans la bande 1 une deuxième série de marquages 10 possédant un profil rectangulaire ou trapézoïdal tout le long d'une direction transversale joignant les deux bords longitudinaux 2, 3 de la bande 1. Comme expliqué plus loin, ces marquages 10 permettront de définir deux rebords plats latéraux dans l'élément filtrant 100.

Il est entendu que tout autre moyen équivalent connu de formation de marquages 9, 10 conformément à l'étape b) du procédé peut être utilisé sans sortir du cadre de la présente invention.

En aval des arbres cannelés 8a, 8b, la bande 1 est ensuite déplacée par des rouleaux d'entraînement 12 en direction d'une station de collage 13 laquelle dépose, lors d'une étape b1) non essentielle du procédé, des cordons de colle le long de chacun des bords longitudinaux 2, 3 de la bande 1.

Par la suite, lors d'une étape c) du procédé, la bande 1 passe entre deux vis sans fin 14, disposées de part et d'autre des bords longitudinaux 2, 3 de la bande 1. Les vis sans fin 14 permettent ainsi de plier la bande 1 en accordéon selon les marquages 9, 10 formés à l'étape b) et de mettre en contact les bords des plis ainsi formés.

Au sortir des vis sans fin 14, la bande 1 présente plusieurs séries de plis transversaux successifs 15 présentant chacun une arête de pliage, les séries étant séparées les unes des autres par deux plis plats contigus 16, correspondant aux marquages 10 formés lors de l'étape b) du procédé.

Lors d'une étape d), la bande 1 ainsi pliée est découpée sur toute sa largeur, par tout moyen de découpe approprié, selon une ligne de découpe perpendiculaire aux bords longitudinaux 2, 3 et positionnée de manière à séparer les deux plis plats latéraux contigus 16 formés à l'étape c). On obtient ainsi un segment de bande 18 possédant sensiblement une forme de parallélépipède rectangle, ledit segment de bande 18 étant délimité par les bords longitudinaux 2, 3 de la bande 1, et par un bord latéral avant 17a et un bord latéral arrière 17b. Le segment de bande 18 ainsi obtenu forme un élément filtrant 100 tel que représenté sur la figure 3.

Cet élément filtrant 100 présente en particulier deux rebords plats longitudinaux 102, 104, communément appelés « pleat locks », qui sont coplanaires avec les arêtes de pliage 105 des plis successifs 15 formés à l'étape c). Ces rebords 102, 104 résultent de l'alignement jointif des portions aplaties des marquages 9 formés à l'étape b). Par ailleurs, l'élément filtrant 100 comprend deux rebords plats latéraux 101, 103 qui sont coplanaires avec les rebords plats longitudinaux 102, 104 et qui correspondent aux plis plats latéraux 16 formés à l'étape c).

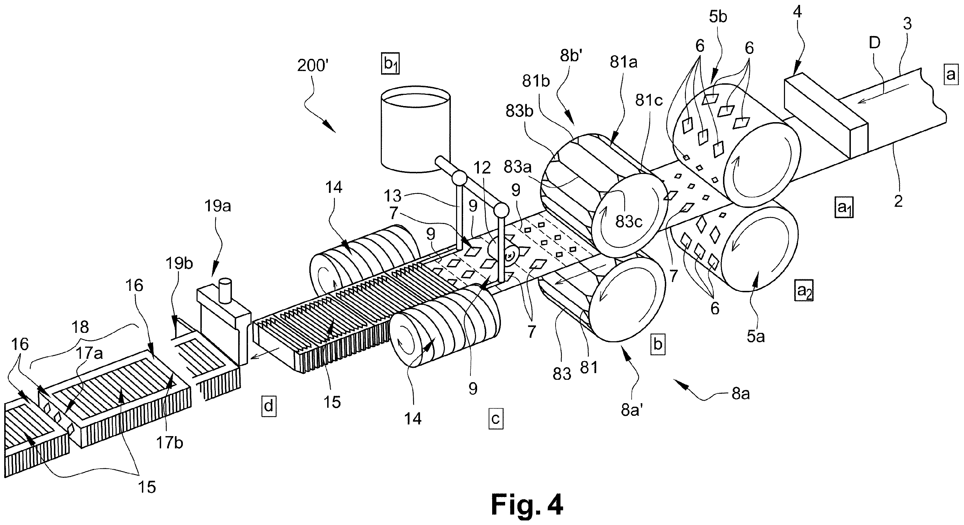

En référence à la figure 4, il est représenté un autre dispositif 200' permettant la mise en oeuvre du procédé de l'invention. Ce mode de réalisation possédant un grand nombre d'éléments communs avec le dispositif 200 décrit précédemment, il ne sera fait mention dans les paragraphes suivants que des différences par rapport au mode de réalisation précédent, les éléments communs conservant les mêmes numéros de référence dans les dessins et dans le descriptif.

Ainsi, à l'étape b) du procédé, le dispositif 200' se distingue par l'utilisation de deux arbres cannelés 8a' et 8b' présentant uniquement à leur périphérie une pluralité de zones en relief 81 et une pluralité de zones en creux 83 destinées à recevoir les zones en relief 81 de l'autre arbre cannelé 8a', 8b.' Les zones en relief 81, respectivement les zones en creux 83, présentent un profil pointu dans une portion centrale 81a, respectivement 83a, et un profil plat dans deux portions latérales 81b, 81c, respectivement 83b, 83c, entourant ladite portion centrale 81a, respectivement 83a. Les arbres cannelés 8a', 8b' permettent ainsi de former dans la bande 1 une pluralité de marquages 9 possédant une forme pointue dans une partie centrale de la bande 1 et une forme aplatie de part et d'autre de ladite partie centrale. Comme expliqué précédemment, ces marquages 9 permettent de former les rebords plats longitudinaux 102 de l'élément filtrant 100.

Le dispositif 200' se distingue en outre du dispositif 200 par le fait de prévoir des moyens additionnels de chauffage et d'aplatissement 19a, 19b disposés soit entre l'étape c) et l'étape d), la bande 1 étant déjà pliée mais pas encore découpée, soit après l'étape d), la bande 1 étant déjà découpée. Dans le mode de réalisation représenté sur la figure 4, ces moyens sont disposés de manière à agir sur le segment de bande 18 obtenu après la découpe de la bande 1, donc lors d'une étape e) succédant à l'étape d).

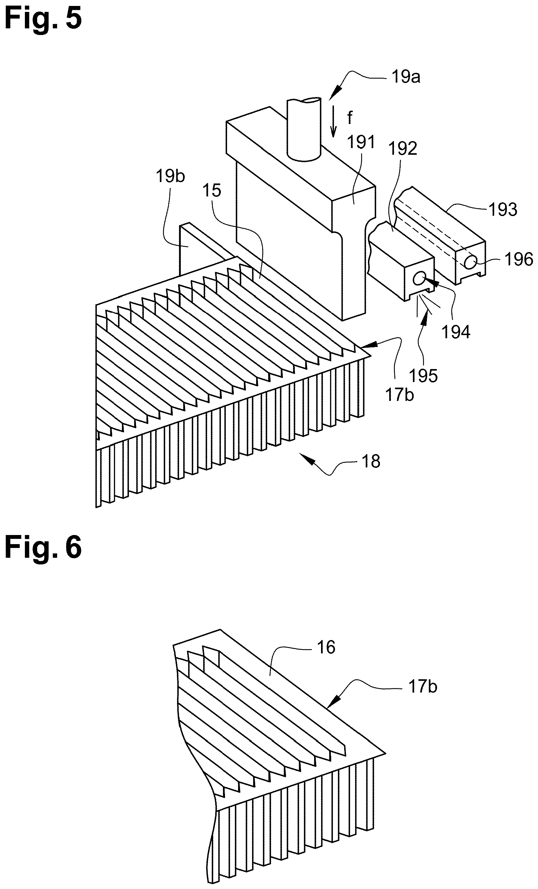

Comme représenté de manière agrandie sur la figure 5, ces moyens additionnels comprennent, d'une part, un élément chauffant 19a, ledit élément chauffant 19a étant disposé au-dessus de la bande 1 à l'aplomb d'un pli 15 à aplatir. En l'occurrence, les plis 15 à aplatir correspondent respectivement au pli 15 jouxtant le bord latéral avant 17a et au pli 15 jouxtant le bord latéral arrière 17b. Comme représenté sur la figure 5, l'élément chauffant 19a pourra se présenter soit sous la forme d'une sonotrode ultrasonique 191, soit sous la forme d'un bloc 192 de plusieurs buses 195 de soufflage d'air chaud alimentées en air via une entrée d'air 194, soit encore sous la forme d'un bloc chauffant 193 traversé par une résistance chauffante 196. L'élément chauffant 19a pourra avantageusement se déplacer selon une direction verticale f de manière à se rapprocher de la bande 1.

Par ailleurs, les moyens additionnels comprennent une enclume rigide 19b destinée à être positionnée sous la bande 1 au niveau du pli 15 à aplatir. L'enclume 19b possède sensiblement une forme de parallélépipède rectangle et est configurée pour venir se placer au niveau du pli 15 jouxtant le bord latéral avant 17a ou arrière 17b. Cette enclume 19b a pour fonction d'aplatir le pli 15 de telle sorte à former une pli plat 16 qui soit contigu à l'un des bord latéraux 17a ou 17b, comme représenté sur la figure 6. Dans une configuration non représentée de l'invention, il sera envisageable de prévoir une paire d'éléments chauffant 19a et une paire d'enclumes 19b, chacun des éléments chauffants 19a et chacune des enclumes 19b étant positionnés de manière adéquate pour former deux plis plats latéraux 16 qui soient contigus aux bords latéraux avant et arrière 17a, 17b respectivement, lesdites paires étant solidaires entre elles de telle sorte que la formation desdits plis plats 16 se fait simultanément.

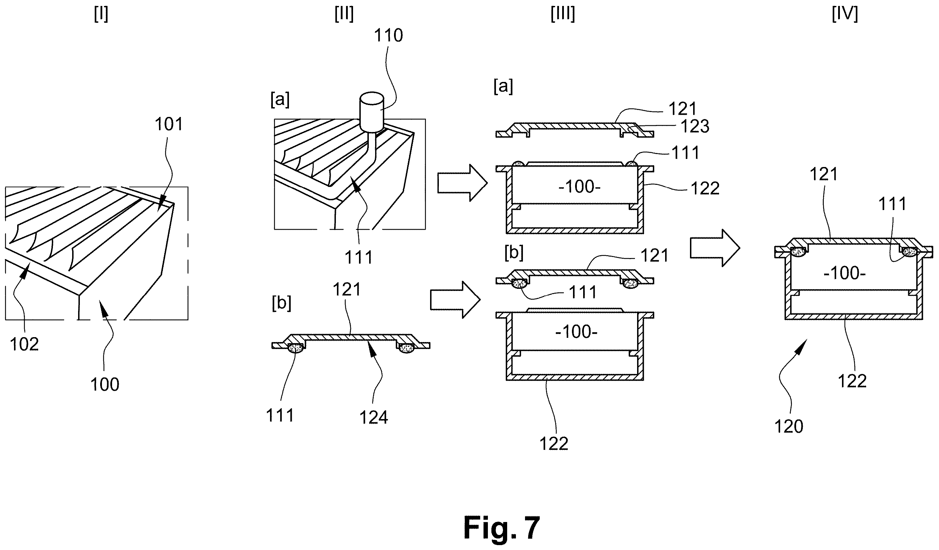

En référence à la figure 7, il est représenté les différentes étapes d'un procédé permettant de former un ensemble de filtration d'air selon l'invention.

Lors d'une première étape I, il est fourni un élément filtrant 100 conforme à la figure 3. L'élément filtrant 100 possède en particulier deux rebords plats latéraux 101, 103 et deux rebords plats longitudinaux 102, 104.

Lors d'une étape IIa, et selon un premier mode de réalisation de l'invention, un joint d'étanchéité 111 est déposé in situ, au moyen d'une buse de dépose 110, sur les rebords plats 101-104 de l'élément filtrant 100. Ce joint d'étanchéité 111 pourra notamment être formé en polyuréthane tyxotropique.

Selon un deuxième mode de réalisation de l'invention, cette étape Ila est remplacée par une étape IIb, au cours de laquelle le joint d'étanchéité 111 est surmoulé ou assemblé dans un couvercle 121 d'une boîte à filtre 122 destinée à recevoir l'élément filtrant 100. Le joint 111 sera positionné sur une face inférieure 124 du couvercle 121 qui est destinée à reposer sur la boîte à filtre 122 et de manière à être aligné avec les rebords plats 101-104 de l'élément filtrant 100 lorsque l'élément filtrant 100 est positionné à l'intérieur de la boîte à filtre 122.

Dans le premier mode de réalisation, l'étape IIa est suivie d'une étape IIIa, au cours de laquelle l'élément filtrant 100 est mis en place à l'intérieur de la boîte à filtre 122 et le couvercle 121 est positionné à l'aplomb de la boîte à filtre 122 de manière à aligner une rainure 123 formée sur la face inférieure 124 du couvercle 121 avec le joint d'étanchéité 111 préalablement déposé sur les rebords plats 101-104 de l'élément filtrant 100.

Dans le deuxième mode de réalisation, l'étape Ilb est suivie d'une étape Illb, au cours de laquelle l'élément filtrant 100 est mis en place à l'intérieur de la boîte à filtre 122 et le couvercle 121 est positionné à l'aplomb de la boîte à filtre 122 de manière à aligner le joint d'étanchéité 111, préalablement surmoulé ou assemblé sur la face inférieure 124 du couvercle 121, avec les rebords plats 101-104 de l'élément filtrant 100.

Lors d'une étape finale IV, le couvercle 121 et la boîte à filtre 122 sont réunis ensemble, le joint d'étanchéité 111 étant comprimé entre le couvercle 121 et l'élément filtrant 100. L'ensemble ainsi formé définit un ensemble de filtration d'air 120 utilisable dans un véhicule automobile.

## Revendications

1. Procédé de fabrication d'un élément filtrant (100), notamment un élément filtrant (100) destiné à la filtration de l'air pour un véhicule automobile, le procédé comprenant les étapes consistant à :
a) Dérouler une bande (1) de média filtrant comportant des fibres synthétiques, la bande (1) présentant deux bords longitudinaux (2, 3) et un bord latéral avant (17a) perpendiculaire aux bords longitudinaux (2, 3), et guider la bande (1) dans une direction d'avancement (D), puis dans cette direction d'avancement (D)
b) Réaliser une pluralité de marquages (9, 10) sur la bande (1) de média filtrant selon une direction transversale aux bords longitudinaux (2,3), au moins une partie des marquages (9) possédant une portion centrale de forme pointue et deux portions latérales plates entourant ladite portion centrale, puis
c) Plier la bande (1) de média filtrant le long de chaque marquage (9, 10) de manière à conformer la bande (1) selon un accordéon, et ensuite
d) Découper la bande (1) perpendiculairement aux bords longitudinaux (2, 3) de manière à former un bord latéral arrière (17b) parallèle au bord latéral avant (17a),
**caractérisé en ce qu'**il comprend une étape supplémentaire consistant à former une zone plate latérale (16) le long des bords latéraux avant et arrière (17a, 17b) respectivement, chacune des zones plates latérales (16) s'étendant entre les bords longitudinaux (2, 3), ladite étape supplémentaire étant réalisée par marquage de la bande (1) lors de l'étape b), chacune des zones plates latérales (16) correspondant à un marquage (10) à profil rectangulaire ou trapézoïdal.

2. Procédé de fabrication selon la revendication 1, **caractérisé en ce que** les marquages (9, 10) de l'étape b) sont réalisés au moyen de deux arbres cannelés (8a, 8b) disposés en vis-à-vis et entre lesquels circule la bande (1), chacun des arbres cannelés (8a, 8b) présentant à sa surface périphérique une pluralité de zones en relief (81, 82) et une pluralité de zones en creux (83, 84) destinées à recevoir les zones en relief (81, 82) de l'autre arbre cannelé (8a, 8b), ladite pluralité de zones en relief (81, 82), respectivement de zones en creux (83, 84), comprenant des premières zones en relief (81), respectivement des premières zones en creux (83), présentant un profil pointu dans une portion centrale (81a, 83a) et un profil plat dans deux portions latérales (81b,81c ; 83b,83c) entourant ladite portion centrale (81a, 83a), et au moins deux deuxièmes zones en relief (82), respectivement deux deuxièmes zones en creux (84), présentant un profil rectangulaire ou trapézoïdal.

3. Procédé de fabrication selon la revendication 1, **caractérisé en ce que** l'étape de formation de chacune des zones plates latérales (16) est réalisée après l'étape c) ou l'étape d) et consiste d'abord à chauffer la bande (1) le long du bord latéral avant (17a), respectivement arrière (17b), et à aplatir le pli (15) de la bande (1) qui est directement adjacent au bord latéral avant (17a), respectivement arrière (17b).

4. Procédé de fabrication selon la revendication 3, **caractérisé en ce que** le chauffage de la bande (1) est réalisé au moyen d'un dispositif de chauffage (19a) choisi parmi une sonotrode ultrasonique (191), des buses de soufflage d'air chaud (192) et un bloc chauffant (193).

5. Procédé de fabrication selon l'une des revendications 2 à 4, **caractérisé en ce que** les marquages (9) de l'étape b) sont réalisés au moyen de deux arbres cannelés (8a', 8b') disposés en vis-à-vis et entre lesquels circule la bande (1), chacun des arbres cannelés (8a', 8b') présentant à sa surface périphérique une pluralité de zones en relief (81) et une pluralité de zones en creux (83) destinées à recevoir les zones en relief (81) de l'autre arbre cannelé (8a', 8b'), lesdites zones en relief (81), respectivement lesdites zones en creux (83), présentant un profil pointu dans une portion centrale (81a, 83a) et un profil plat dans deux portions latérales (81b,81c; 83b,83c) entourant ladite portion centrale (81a, 83a).

6. Procédé de fabrication selon l'une des revendications précédentes, **caractérisé en ce que** le pliage de l'étape c) est réalisé au moyen de deux vis sans fin (14) disposées de part et d'autre des bords longitudinaux (2, 3) de la bande (1).

7. Procédé de fabrication selon l'une des revendications précédentes, **caractérisé en ce qu'**il comprend en outre une étape a2) d'embossage de la bande (1) de manière à former des empreintes d'espacement (7), ladite étape a2) d'embossage étant réalisée de préférence avant l'étape b).

8. Procédé de fabrication selon l'une des revendications précédentes, **caractérisé en ce qu'**il comprend en outre une étape b1) de dépose d'un cordon de colle sur la bande (1), entre les étapes b) et c).

9. Élément filtrant (100) de véhicule automobile directement obtenu par le procédé de fabrication selon l'une des revendications précédentes, ledit élément filtrant (100) comprenant une bande (1) d'un média filtrant plié en accordéon et formé d'un matériau comportant des fibres synthétiques, **caractérisé en ce que** l'élément filtrant (100) comprend deux rebords plats longitudinaux (102, 104) et deux rebords plats latéraux (101, 103), ainsi qu'une pluralité de marquages (9, 10) sur la bande (1), au moins une partie des marquages (9) possédant une portion centrale de forme pointue et deux portions latérales plates entourant ladite portion centrale, et **en ce que** l'élément filtrant (100) comporte une zone plate latérale (16) le long de chacun des rebords latéraux (101, 103), chacune des zones plates latérales (16) correspondant à un marquage (10) à profil rectangulaire ou trapézoïdal.

10. Ensemble de filtration d'air (120) pour véhicule automobile comprenant une boîte à filtre (122) dans laquelle débouche une entrée d'air, un élément filtrant (100) selon la revendication 9 logé à l'intérieur de la boîte à filtre (122), un couvercle (121) de boîte à filtre fermant la boîte à filtre (122), et un joint d'étanchéité (111) disposé entre le couvercle (121) et l'élément filtrant (100), le joint d'étanchéité (111) s'étendant le long des rebords plats longitudinaux et latéraux (101-104) de l'élément filtrant (100).

11. Ensemble de filtration d'air (120) selon la revendication 10, **caractérisé en ce que** le joint d'étanchéité (111) est surmoulé à l'intérieur du couvercle (121) de boîte à filtre.

12. Ensemble de filtration d'air (120) selon la revendication 10, **caractérisé en ce que** le joint d'étanchéité (111) est déposé in situ sur les rebords plats longitudinaux et latéraux (101-104) de l'élément filtrant (100).

## Patentansprüche

1. Herstellungsverfahren eines Filterelements (100), insbesondere eines Filterelements (100), das zur Luftfiltration für ein Kraftfahrzeug bestimmt ist, wobei das Verfahren folgende Schritte umfasst:
a) Abwickeln eines Bands (1) eines Filtermediums, das synthetische Fasern umfasst, wobei das Band (1) zwei Längskanten (2, 3) und eine vordere Seitenkante (17a) senkrecht zu den Längskanten (2, 3) aufweist, und Führen des Bands (1) in einer Vorschubrichtung (D), dann in dieser Vorschubrichtung (D)
b) Ausführen einer Vielzahl von Markierungen (9, 10) auf dem Band (1) eines Filtermediums gemäß einer Richtung quer zu den Längskanten (2, 3), wobei wenigstens ein Teil der Markierungen (9) einen Mittelabschnitt von spitzer Form und zwei flache Seitenabschnitte aufweist, die den Mittelabschnitt umgeben, dann
c) Falten des Bands (1) eines Filtermediums entlang jeder Markierung (9, 10), sodass das Band (1) gemäß einem Akkordeon geformt wird, und danach
d) Abschneiden des Bands (1) senkrecht zu den Längskanten (2, 3) sodass eine hintere Seitenkante (17b) parallel zu der vorderen Seitenkante (17a) gebildet wird,
**dadurch gekennzeichnet, dass** es einen zusätzlichen Schritt umfasst, der im Bilden eines flachen Seitenbereichs (16) jeweils entlang der vorderen und hinteren Seitenkante (17a, 17b) besteht, wobei sich jeder flache Seitenbereich (16) zwischen den Längskanten (2, 3) erstreckt, wobei der zusätzliche Schritt durch Markieren des Bands (1) während Schritt b) ausgeführt wird, wobei jeder der flachen Seitenbereiche (16) einer Markierung (10) mit rechteckigem oder trapezförmigem Profil entspricht.

2. Herstellungsverfahren nach Anspruch 1, **dadurch gekennzeichnet, dass** die Markierungen (9, 10) aus Schritt b) mithilfe von zwei geriffelten Wellen (8a, 8b) ausgeführt werden, die gegenüberliegend angeordnet sind und zwischen denen das Band (1) durchläuft, wobei jede der geriffelten Wellen (8a, 8b) auf ihrer umlaufenden Oberfläche eine Vielzahl von vorstehenden Bereichen (81, 82) und eine Vielzahl von ausgesparten Bereichen (83, 84) aufweist, die dazu bestimmt sind, die vorstehenden Bereiche (81, 82) der anderen geriffelten Welle (8a, 8b) aufzunehmen, wobei die Vielzahl von vorstehenden Bereichen (81, 82) beziehungsweise von ausgesparten Bereichen (83, 84) erste vorstehende Bereiche (81) beziehungsweise erste ausgesparte Bereiche (83) umfasst, die ein spitzes Profil in einem Mittelabschnitt (81a, 83a) und ein flaches Profil in zwei Seitenabschnitten (81b, 81c; 83b, 83c) aufweisen, die den Mittelabschnitt (81a, 83a) umgeben, und wenigstens zwei zweite vorstehende Bereiche (82) beziehungsweise zwei zweite ausgesparte Bereiche (84), die ein rechteckiges oder trapezförmiges Profil aufweisen.

3. Herstellungsverfahren nach Anspruch 1, **dadurch gekennzeichnet, dass** der Schritt des Bildens jedes der flachen Seitenbereiche (16) nach Schritt c) oder Schritt d) ausgeführt wird und zuerst im Erhitzen des Bands (1) entlang der vorderen (17a) beziehungsweise hinteren (17b) Seitenkante und im Glätten der Falte (15) des Bands (1) besteht, die direkt an die vordere (17a) beziehungsweise hintere (17b) Seitenkante angrenzt.

4. Herstellungsverfahren nach Anspruch 3, **dadurch gekennzeichnet, dass** das Erhitzen des Bands (1) mithilfe einer Heizvorrichtung (19a) ausgeführt wird, die gewählt wird aus einer Ultraschall-Sonotrode (191), Heißluft-Blasdüsen (192) und einem Heizblock (193).

5. Herstellungsverfahren nach einem der Ansprüche 2 bis 4, **dadurch gekennzeichnet, dass** die Markierungen (9) aus Schritt b) mithilfe von zwei geriffelten Wellen (8a', 8b') ausgeführt werden, die gegenüberliegend angeordnet sind und zwischen denen das Band (1) durchläuft, wobei jede der geriffelten Wellen (8a', 8b') auf ihrer umlaufenden Oberfläche eine Vielzahl von vorstehenden Bereichen (81) und eine Vielzahl von ausgesparten Bereichen (83) aufweist, die dazu bestimmt sind, die vorstehenden Bereiche (81) der anderen geriffelten Welle (8a', 8b') aufzunehmen, wobei die vorstehenden Bereiche (81) beziehungsweise die ausgesparten Bereiche (83) ein spitzes Profil in einem Mittelabschnitt (81a, 83a) und ein flaches Profil in zwei Seitenabschnitten (81b, 81c; 83b, 83c) aufweisen, die den Mittelabschnitt (81a, 83a) umgeben.

6. Herstellungsverfahren nach einem der vorstehenden Ansprüche, **dadurch gekennzeichnet, dass** das Falten aus Schritt c) mithilfe von zwei Schnecken (14) ausgeführt wird, die beidseits der Längskanten (2, 3) des Bands (1) angeordnet sind.

7. Herstellungsverfahren nach einem der vorstehenden Ansprüche, **dadurch gekennzeichnet, dass** es weiter einen Schritt a2) des Prägens des Bands (1) umfasst, sodass Abstandsabdrücke (7) gebildet werden, wobei der Schritt a2) des Prägens vorzugsweise vor Schritt b) ausgeführt wird.

8. Herstellungsverfahren nach einem der vorstehenden Ansprüche, **dadurch gekennzeichnet, dass** es weiter einen Schritt b1) des Auftragens einer Kleberaupe auf das Band (1) zwischen Schritt b) und c) umfasst.

9. Filterelement (100) für ein Kraftfahrzeug, das direkt erhalten wird durch das Herstellungsverfahren nach einem der vorstehenden Ansprüche, wobei das Filterelement (100) ein Band (1) eines Filtermediums umfasst, das akkordeonförmig gefaltet ist und aus einem Material gebildet ist, das synthetische Fasern umfasst, **dadurch gekennzeichnet, dass** das Filterelement (100) zwei flache Längsränder (102, 104) und zwei flache Seitenränder (101, 103) sowie eine Vielzahl von Markierungen (9, 10) auf dem Band (1) umfasst, wobei wenigstens ein Teil der Markierungen (9) einen Mittelabschnitt von spitzer Form und zwei flache Seitenabschnitte aufweist, die den Mittelabschnitt umgeben, und dadurch, dass das Filterelement (100) einen flachen Seitenbereich (16) entlang jedes der Seitenränder (101, 103) umfasst, wobei jeder der flachen Seitenbereiche (16) einer Markierung (10) mit rechteckigem oder trapezförmigem Profil entspricht.

10. Luftfiltereinheit (120) für ein Kraftfahrzeug, umfassend einen Filterkasten (122), in den ein Lufteinlass mündet, ein Filterelement (100) nach Anspruch 9, das im Inneren des Filterkastens (122) untergebracht ist, einen Filterkasten-Deckel (121), der den Filterkasten (122) verschließt, und eine Dichtung (111), die zwischen dem Deckel (121) und dem Filterelement (100) angeordnet ist, wobei sich die Dichtung (111) entlang der flachen Längs- und Seitenränder (101-104) des Filterelements (100) erstreckt.

11. Luftfiltereinheit (120) nach Anspruch 10, **dadurch gekennzeichnet, dass** die Dichtung (111) im Inneren des Filterkasten-Deckels (121) aufgeformt ist.

12. Luftfiltereinheit (120) nach Anspruch 10, **dadurch gekennzeichnet, dass** die Dichtung (111) in situ auf den flachen Längs- und Seitenrändern (101-104) des Filterelements (100) angebracht wird.

## Claims

1. A method for manufacturing a filter element (100), in particular a filter element (100) intended for the filtration of air for a motor vehicle, the method comprising the steps of:
a) unwinding a strip (1) of filter medium including synthetic fibers, the strip (1) having two longitudinal edges (2, 3) and a front lateral edge (17a) perpendicular to the longitudinal edges (2, 3), and guiding the strip (1) in an advance direction (D), then in this advance direction (D)
b) making a plurality of markings (9, 10) on the strip (1) of filter medium in a direction transverse to the longitudinal edges (2,3), at least some of the markings (9) having a pointed-shape central portion and two flat lateral portions surrounding said central portion, then
c) folding the strip (1) of filter medium along each marking (9, 10) so as to conform the strip (1) into an accordion, and then
d) cutting the strip (1) perpendicular to the longitudinal edges (2, 3) so as to form a rear lateral edge (17b) parallel to the front lateral edge (17a),
**characterized in that** it comprises an additional step of forming a lateral flat area (16) along the front and rear lateral edges (17a, 17b) respectively, each of the lateral flat areas (16) extending between the longitudinal edges (2, 3), said additional step being carried out by marking the strip (1) during step b), each of the lateral flat areas (16) corresponding to a marking (10) with a rectangular or trapezoidal profile.

2. The manufacturing method according to claim 1, **characterized in that** the markings (9, 10) of step b) are carried out by means of two splined shafts (8a, 8b) disposed opposite each other and between which the strip (1) circulates, each of the splined shafts (8a, 8b) having, on its peripheral surface, a plurality of raised areas (81, 82) and a plurality of recessed areas (83, 84) intended to receive the raised areas (81, 82) of the other splined shaft (8a, 8b), said plurality of raised areas (81, 82), respectively recessed areas (83, 84), comprising first raised areas (81), respectively first recessed areas (83), having a pointed profile in a central portion (81a, 83a) and a flat profile in two lateral portions (81b, 81c; 83b, 83c) surrounding said central portion (81a, 83a), and at least two second raised areas (82), respectively two second recessed areas (84), having a rectangular or trapezoidal profile.

3. The manufacturing method according to claim 1, **characterized in that** the step of forming each of the lateral flat areas (16) is carried out after step c) or step d) and lies in first heating the strip (1) along the front (17a), respectively rear (17b) lateral edge, and flattening the fold (15) of the strip (1) which is directly adjacent to the front (17a), respectively rear (17b) lateral edge.

4. The manufacturing method according to claim 3, **characterized in that** the heating of the strip (1) is carried out by means of a heating device (19a) chosen from among an ultrasonic sonotrode (191), hot air blowing nozzles (192) and a heating block (193).

5. The manufacturing method according to any of claims 2 to 4, **characterized in that** the markings (9) of step b) are carried out by means of two splined shafts (8a', 8b') disposed opposite each other and between which the strip (1) circulates, each of the splined shafts (8a', 8b') having, on its peripheral surface, a plurality of raised areas (81) and a plurality of recessed areas (83) intended to receive the raised areas (81) of the other splined shaft (8a', 8b'), said raised areas (81), respectively said recessed areas (83), having a pointed profile in a central portion (81a, 83a) and a flat profile in two lateral portions (81b, 81c; 83b, 83c) surrounding said central portion (81a, 83a).

6. The manufacturing method according to any of the preceding claims, **characterized in that** the folding of step c) is carried out by means of two endless screws (14) disposed on either side of the longitudinal edges (2, 3) of the strip (1).

7. The manufacturing method according to any of the preceding claims, **characterized in that** it further comprises a step a2) of embossing the strip (1) so as to form spacing indentations (7), said embossing step a2) being preferably carried out before step b).

8. The manufacturing method according to any of the preceding claims, **characterized in that** it further comprises a step b1) of depositing an adhesive bead on the strip (1), between steps b) and c).

9. A motor vehicle filter element (100) directly obtained by the manufacturing method according to any of the preceding claims, said filter element (100) comprising a strip (1) of a filter medium accordion-folded and formed of a material including synthetic fibers, **characterized in that** the filter element (100) comprises two longitudinal flat edges (102, 104) and two lateral flat edges (101, 103), as well as a plurality of markings (9, 10) on the strip (1), at least some of the markings (9) having a pointed-shape central portion and two flat lateral portions surrounding said central portion, and **in that** the filter element (100) includes a lateral flat area (16) along each of the lateral edges (101, 103), each of the lateral flat areas (16) corresponding to a marking (10) with a rectangular or trapezoidal profile.

10. An air filtration assembly (120) for a motor vehicle comprising a filter box (122) into which an air inlet opens, a filter element (100) according to claim 9 housed inside the box filter (122), a filter box lid (121) closing the filter box (122), and a gasket (111) disposed between the lid (121) and the filter element (100), the gasket (111) extending along the longitudinal and lateral flat edges (101-104) of the filter element (100).

11. The air filtration assembly (120) according to claim 10, **characterized in that** the gasket (111) is over-molded inside the lid (121) of the filter box.

12. The air filtration assembly (120) according to claim 10, **characterized in that** the gasket (111) is deposited in situ on the longitudinal and lateral flat edges (101-104) of the filter element (100).
